# EUROPEAN PATENT APPLICATION

(11) **EP 4 332 312 A1**
(43) Date of publication of application: **06.03.2024**
(21) Application number: 23193991.9
(22) Date of filing: 29.08.2023
(51) Int. Cl.: E03B 7/07, G01D 21/02, G08B 21/24

(54) **COMPREHENSIVE WATER PROTECTION DEVICE**

(30) Priority: 31.08.2022 CN 202222302975 U
(71) Applicant: CULLIGAN INTERNATIONAL COMPANY, Rosemont, IL 60018 (US)
(72) Inventor: YANG, Kezhong, SHANGHAI (CN); LI, Hongyu, SHANGHAI (CN); HU, Jianping, SHANGHAI (CN)
(74) Representative: IPAZ

(57) **Abstract**

A comprehensive water protection device (10), which is arranged on a water pipeline (12) between a water pipeline inlet (13) and downstream water equipment (14), includes a control unit (24), a water circuit valve (16) installed on the water pipeline (12), a flow meter (18), a pressure gauge (22), and at least one of a water quality detection probe (20) and a water leakage probe (26), which is used to monitor the water leakage in the water pipeline (12) and the downstream water equipment (14). The water circuit valve (16), the flow meter (18), the pressure gauge (22), the water quality detection probe (20), and the water leakage probe (26) are connected to the control unit (24); and the flow meter (18), the pressure gauge (22), the water quality detection probe (20), and the water leakage probe (26) are set in the water pipeline (12).

## Description

### TECHNICAL FIELD

The present disclosure relates to the technical field of water pipelines, in particular to a new comprehensive water protection device for water pipelines.

### BACKGROUND

As household water products become more popular, various water equipment, accessories, valves, and the like are connected to water pipelines. Abnormally high water pressure, low temperature freezing and the like cause damage to water pipelines and water equipment. In addition, due to reasons such as cleaning the water tank in the front section, the water quality may become poor and unsuitable for drinking. Furthermore, there is a risk of water seepage due to the aging of waterway accessories.

Accordingly, household water use is more complicated and there are multiple risks. At present, there are various devices such as water leakage protection devices, and water quality, pressure and temperature measurement devices on the market, but there is a lack of a unified, centralized monitoring and protection device.

Thus, there is the need for a unified, centralized monitoring and protection device for water pipelines.

### SUMMARY

The above-listed need is met or exceeded by the present comprehensive water protection device. In particular, the present comprehensive water protection device overcomes the defect of the lack of a unified, centralized monitoring and protection device for water pipelines.

Moreover, the present comprehensive water protection device combines waterway valves, flow meters, pressure gauges, water quality detection probes and water leakage probes together, and performs unified control through a control unit, which improves the stability of the structure, reduces space occupation, and improves the device. The linkage and coordination ability among the components has improved the all-round centralized monitoring of the waterway pipeline.

The present comprehensive water protection device is provided with three kinds of detection signal reminder methods, including an audible sound alarm, a display screen alarm and wireless communication to alert a user by providing a notification to mobile communication equipment. Thus, the present comprehensive water protection device provides timely message reminders and is user friendly.

More specifically, a comprehensive water protection device, which is arranged on a water pipeline between a water pipeline inlet and downstream water equipment, includes a control unit, a water circuit valve installed on the water pipeline, a flow meter, a pressure gauge, and at least one of: a water quality detection probe; and a water leakage probe, which is used to monitor the water leakage point in the water pipeline and the downstream water equipment. The water circuit valve, the flow meter, the pressure gauge, the water quality detection probe, and the water leakage probe are connected to the control unit. Also, the flow meter, the pressure gauge, the water quality detection probe, and the water leakage probe are set in the water pipeline.

In preferred embodiments, the water quality detection probe is a TDS probe, an NTC probe, or a conductivity probe, and the control unit is connected to the water circuit valve through a switch circuit. Preferably, the switch circuit is provided with a comparator, and an input terminal of the comparator is respectively connected to a signal value output by the control unit and a preset signal standard value, such that an output terminal of the comparator outputs a switch signal which drives the waterway valve to be turned on or off.

In another preferred embodiment, the control unit is connected with a display screen and a key unit, such that the display screen shows the setting of the signal standard value and the key unit is used to generate a signal standard value modification instruction. In yet another preferred embodiment, the control unit is connected with an audio alarm, and the output terminal of the comparator is connected with the audio alarm. In yet another preferred embodiment, the control unit is connected with a wireless communication module, such that the control unit communicates with a mobile communication device through the wireless communications module. Preferably, the wireless communication module is a WiFi module, a Bluetooth module or a mobile communication module.

In preferred embodiments, the control unit is connected with a power adapter, the control unit is powered by the power adapter, and the control unit is connected with a backup power supply. Preferably, the flow meter is a digital flow meter and the pressure gauge is a digital pressure gauge.

In a preferred embodiment, the waterway valve, the flow meter, the pressure gauge, and the water quality detection probe are all arranged in the water pipeline. A preferred embodiment includes both the water quality detection probe and the water leakage probe.

### BRIEF DESCRIPTION OF THE DRAWINGS

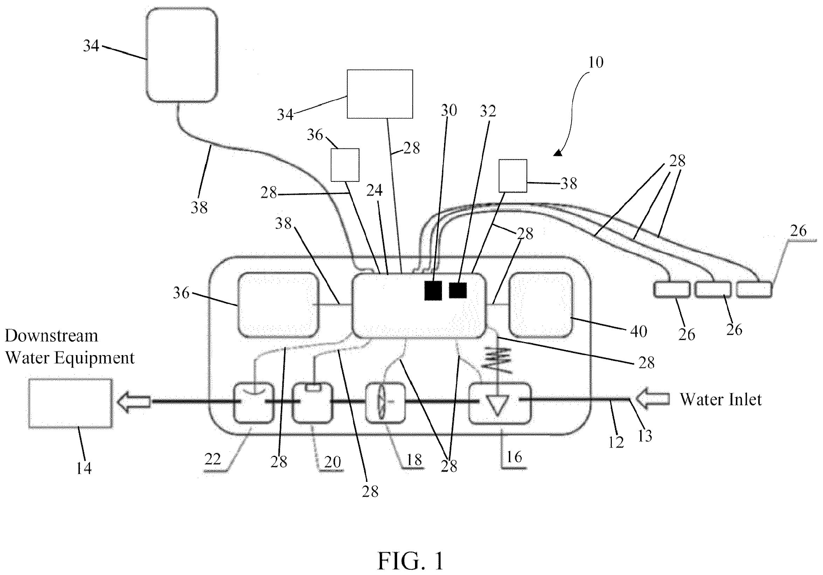

FIG. 1 is the structural representation of the present integrated comprehensive water protection device according to an example embodiment.

### DETAILED DESCRIPTION

As shown in Figure 1, a new type of comprehensive water protection device is generally designated 10, and is arranged on a water pipeline 12 between a water pipeline inlet 13 and downstream water equipment 14. The comprehensive water protection device 10 includes a water circuit valve 16, a flow meter 18, a water quality detection probe 20, a pressure gauge 22, a control unit 24, and a water leakage probe 26. The water circuit valve 16, the flow meter 18, the water quality detection probe 20, the pressure gauge 22, and the water leakage probe 26 have connections 28 with the control unit 24. The connections 28 are optionally wireless or wired, as is known in the art. In a preferred embodiment, the water leakage probe 26 remote from the control unit 24 and the water circuit valve 16.

While the water circuit valve 16 is preferably a solenoid valve, any electronically controlled valve, including but not limited to electromagnetic valves, ball valves, rotary valves and the like as are known in the art are contemplated as the water circuit valve 16. In a preferred embodiment, a gear motor connected to the control unit 24 is used to actuate the water circuit valve 16.

Preferably, the water circuit valve 16, the flow meter 18, the pressure gauge 22 and the water quality detection probe 20 are all connected into the water pipeline 12. It is further preferred that the valve 16, the flow meter 18, the water quality detection probe 20 and the pressure gauge 22 are connected sequentially to the pipeline 12. In addition, the water leakage probe 26 is used to monitor the water leakage in the water inlet pipeline 12 and the downstream water equipment 14. The control unit 24 is also connected to the waterway valve 16 through a switch circuit 30.

The water quality detection probe 20 is preferably a total dissolved solids (TDS) probe a negative temperature coefficient (NTC) probe, or a conductivity probe. In preferred embodiments, the flowmeter 18 is a digital flowmeter, and the pressure gauge 22 is a digital pressure gauge.

Preferably, the waterway valve 16 of the comprehensive water protection device 10 is opened or closed by the control unit 24 based on a flow rate signal from the flow meter 18, a dissolved solid (water quality) signal and a temperature signal from the water quality detection probe 20, a pressure signal from the pressure gauge 22, and a water leakage detection signal from the water leakage probe 26.

The switch circuit 30 built in the control unit 24 is provided with a preset signal standard value, and the control unit compares the received signal standard value with the preset signal standard value through the switch circuit to drive the opening and closing of the waterway valve 16.

Specifically, the switch circuit 30 is provided with a comparator 32, such that an input terminal of the comparator is respectively connected to a signal value output by the control unit 24 and a preset signal standard value. Further, the output terminal of the comparator 32 outputs a switch signal to drive the waterway valve 16 to open or close.

As a preferred embodiment, in order to remind the user according to the signal detected by the control unit 24, the following reminder methods can be used:

First, the control unit 24 is preferably connected with an audio alarm 34, and the output end of the comparator is also connected with the audio alarm to provide an audible alarm.

Second, the control unit 24 is preferably connected with a display screen 36 and a key unit 38, such that the display screen displays the set value of the signal standard value, and the key unit is used to generate a signal standard value modification instruction. Preferably, the display screen is also used to display alarm information to provide the display screen alarm. In a preferred embodiment, the display screen 36 is an LCD touch screen which provides a user interface for the comprehensive protection device 10.

Third, the control unit 24 is preferably connected with a wireless communication module 40, and the control unit 24 communicates with the user equipment through the wireless communication module 32. The wireless communication module 40 is a WiFi module, a Bluetooth module or a mobile communication module which sends alarm information to the user equipment, such as a mobile communication device.

The control unit 24 is also connected with a power adapter 42, and the control unit obtains power through the power adapter 42.

Preferably, the control unit 24 is also connected with a backup power supply 44, so that even in the event of a power failure, normal logic judgments and closure of the water circuit valve 16 to shut off water flow can still be accomplished. The power adapter 42 and the backup power supply 44 are connected to the control unit 24 via power cables 46.

The comprehensive protection device 10 covers all aspects related to household water use. At present, similar household water protection devices are on the market, but only in one or two aspects. For comprehensive protection, multiple devices need to be combined together, the stability is poor, and the multiple devices occupy space and lack linkage coordination capabilities between devices.

The present comprehensive protection device 10 provides improved protection over existing systems in the following situations:

When the water pressure exceeds the set value, the water is shut off due to closure of the water circuit valve 16 and an alarm is issued.

When the water pressure is too low, a low pressure reminder is sent via the wireless communications module to the mobile communication device;

When the water temperature is too low, the water is shut off due to closure of the water circuit valve 16 and an alarm is issued;

When the water quality TDS suddenly rises, a water quality reminder is generated;

When the flow rate is abnormal, various reminders are given in conjunction with the abnormal duration, such as: forgetting to turn off the tap; and leakage (logic judgment).

When the water leakage detection probe 20 detects water leakage, the water is shut off due to closure of the water circuit valve 16 and an alarm is issued; and

The user can also control the switch water valve 16 through a mobile APP on the mobile communication device.

While a particular embodiment of the present comprehensive water protection device has been described herein, it will be appreciated by those skilled in the art that changes and modifications may be made thereto without departing from the invention in its broader aspects and as set forth in the following claims.

## Claims

1. A comprehensive water protection device (10), which is arranged on a water pipeline (12) between a water pipeline inlet (13) and downstream water equipment (14), comprising:
- a control unit (24);
- a water circuit valve (16) installed on the water pipeline (12);
- a flow meter (18);
- a pressure gauge (22); and
- at least one of:
∘ a water quality detection probe (20); and
∘ a water leakage probe (26), which is used to monitor the water leakage in the water pipeline (12) and the downstream water equipment (14);
wherein said water circuit valve (16), said flow meter (18), said pressure gauge (22), said water quality detection probe (20), and said water leakage probe (26) are connected to said control unit (24); and
wherein said flow meter (18), said pressure gauge (22), said water quality detection probe (20), and said water leakage probe (26) are set in the water pipeline (12).

2. The comprehensive water protection device (10) according to claim 1, wherein said water quality detection probe (20) is a TDS probe, an NTC probe, or a conductivity probe.

3. The comprehensive water protection device (10) according to claim 1 or 2, wherein said control unit (24) is connected to said water circuit valve (16) through a switch circuit (30).

4. The comprehensive water protection device (10) according to claim 3, wherein said switch circuit (30) is provided with a comparator (32), an input terminal of said comparator (32) being respectively connected to a signal value output by said control unit (24) and a preset signal standard value, wherein an output terminal of said comparator (32) outputs a switch signal which drives said water circuit valve (16) to be turned on or off.

5. The comprehensive water protection device (10) according to claim 4, wherein said control unit (24) is connected with a display screen (36) and a key unit (38), and wherein said display screen (36) shows the setting of said signal standard value and said key (38) unit is used to generate a signal standard value modification instruction.

6. The comprehensive water protection device (10) according to claim 4 or 5, wherein said control unit (24) is connected with an audio alarm (34), and said output terminal of said comparator (32) is connected with said audio alarm (34).

7. The comprehensive water protection device (10) according to anyone of claims 1 to 6, wherein said control unit (24) is connected with a wireless communication module (40), wherein said control unit (24) communicates with a mobile communication device through said wireless communications module (40).

8. The comprehensive water protection device (10) according to claim 7, wherein said wireless communication module (40) is a WiFi module, a Bluetooth module or a mobile communication module.

9. The comprehensive water protection device (10) according to anyone of claims 1 to 8, wherein said control unit (24) is connected with a power adapter (42), and said control unit (24) is powered by said power adapter (42).

10. The comprehensive water protection device (10) according to anyone of claims 1 to 9, wherein said control unit (24) is connected with a backup power supply (44).

11. The comprehensive water protection device (10) according to anyone of claims 1 to 10, wherein said flow meter (18) is a digital flow meter.

12. The comprehensive water protection device (10) according to anyone of claims 1 to 11, wherein said pressure gauge (22) is a digital pressure gauge.

13. The comprehensive water protection device (10) according to anyone of claims 1 to 12, further comprising both said water quality detection probe (20) and said water leakage probe (26).
